# EUROPEAN PATENT APPLICATION

(11) **EP 1 170 193 A1**
(43) Date of publication of application: **09.01.2002**
(21) Application number: 00114237.1
(22) Date of filing: 03.07.2000
(51) Int. Cl.: B62B 7/08, B62B 9/20

(54) **Stroller with a fold actuator**

(71) Applicant: GRACO CHILDREN'S PRODUCTS INC., Elverson, PA 19520 (US)
(72) Inventor: Pacella, Jonathan M., New Holland, PA 17557 (US); Kakuda, Baku, Reading, PA 19607 (US)
(74) Representative: Frank-Molnia, David

(57) **Abstract**

A stroller (100) has a foldable frame (102) and a pair of locking devices (112) mounted on the frame to lock the frame to the use configuration, and a remotely actuated one-hand-fold (OHF) actuator (200). The OHF actuator has first and second rotatable members (220,240) rotatably mounted to a stroller handle bar (104) and wired to both locking devices. The OHF actuator can further include a rotation lock (250) mounted to one (240) of the rotatable member to prevent the one rotatable member from rotating to the unlock position. The first and second rotatable members are independently rotatable. The rotation lock and the first and second rotatable members are operable with one hand.

## Description

### Background

A collapsible stroller typically has a foldable frame, foldable between an extended (use) configuration and a collapsed (stow) configuration. The frame has a pair of left and right side locking devices to maintain the frame in the use configuration. The operator needs to use both hands to unlock the two locking devices. Using two hands can be cumbersome and inconvenient, particularly when only one hand is free.

In this respect, U.S. Patent No. 6,068,284 assigned to the present applicant provides a remotely located one-hand-fold (OHF) actuator. The OHF actuator is conveniently located at the center of the handle bar, which makes it convenient and simple to simultaneously unlock its pair of locking devices using one hand. The OHF actuator has a member rotatably mounted to the handle bar. The rotatable member carries a rotation-to-linear motion transfer coupling, which comprises two pairs of opposing helical grooves engageable with a pair of pins movably mounted to the handle bar. These pins are wired to the locking devices using a pair of cables. The opposing helical grooves guide and move the pins toward each other to simultaneously pull the cables and release both locking devices upon rotating the rotatable member. A rotation lock, which is associated with the rotatable member, prevents the moving member from releasing the locking devices until it is manipulated to unlock. The rotation lock comprises a collar fixedly mounted to the handle bar, adjacent the left side of the rotatable member for right hand operation, and a latch slidably mounted on the left side of the rotatable member. A socket formed in the collar receives a portion of the latch to prevent the rotatable member from rotating. To fold the stroller, the operator slides the latch away from the collar and rotates the rotatable member and the latch with a single hand, simultaneously unlocking both locking devices.

The OHF actuator described in the '284 patent provides the convenience and simplicity. Nonetheless, the operator may find it desirable to independently control the two locking devices remotely, while maintaining the one-hand-fold operating feature, to provide additional protection from unintentional stroller folding. The present invention addresses this need.

### Summary

The present invention relates to a stroller, a fold actuator thereof, and a method of folding the stroller. The stroller has a frame foldable between an extended configuration and a collapsed configuration, and first and second locking devices mounted on the frame to lock the frame in the extended configuration. The frame has a handle bar connected to portions of the frame connected to the first and second locking devices. The stroller further includes a fold actuator mounted on a portion of the handle bar.

The fold actuator comprises first and second movable members each movably mounted to the handle bar between a locked position and an unlocked position. The first movable member is operatively connected to the first locking device for unlocking the first locking device when the first movable member is moved to the unlocked position. The second movable member is operatively connected to the second locking device for unlocking the second locking device when the second movable member is moved to the unlocked position.

The first and second movable members are independently operable or movable. Specifically, the first and second movable members are independently rotatable relative to the handle bar. Each of the first and second movable members can be rotatable about an axis generally parallel to the longitudinal axis of the handle bar.

The fold actuator can further include a rotation lock mounted to one of the first and second movable members to prevent the one movable member from rotating to the unlock position. The rotation lock and the first and second movable members can be operable with one hand to fold the stroller.

The rotation lock can include a collar fixedly mounted to the handle bar adjacent to one of the first and second movable members and a latch movably mounted to the one movable member. The latch can engage the collar to prevent the one moving member from rotating. The latch is movable toward and away from the collar and can be biased toward the collar so that the latch automatically engages the collar when the one movable member is in the locked position. The latch and the first and second movable members can be operable with a single hand to release both of the locking devices.

The fold actuator further includes a motion transfer mechanism comprising first and second opposing pairs of grooves, first and second slots, and first and second pins. The first opposing pair of grooves are formed on the first movable member and the second opposing pair of grooves are formed on the second movable member. The first and second slots can extend through the handle bar. The first and second pins are movably disposed respectively in the first and second slots and operably connected to the respective first and second locking devices, and extend into the first and second opposing pairs of grooves.

The first pin can have opposing ends extending outwardly from the handle bar, which ends are guided in the first opposing pair of grooves. The second pin can have opposing ends extending outwardly from the handle bar, which ends are guided in the second opposing pair of grooves. The first and second opposing pairs of grooves are configured to move the first and second pins in opposing directions, while the first and second slots confine the first and second pins linearly.

Each of the first and second pairs of grooves can be helical, and configured to engage and maintain the first and second pins held between the first and second opposing pairs of helical grooves without separately biasing the first and second pins.

First and second cables can respectively connect the first and second pins to the respective first and second locking devices. Moreover, the first and second movable members each can comprise two half shells connected together. In this respect, the first and second pairs of grooves can formed on the inner periphery of the respective two half shells of the first and second rotatable members. Each pair of the first and second grooves, which can be helical, can be angled symmetrically in the opposite directions.

The method of folding a stroller can comprise: mounting a first rotatable member to the handle bar and operatively connecting the first rotatable member to the first locking device so that the first rotatable member unlocks the first locking device by rotating the first rotatable member from a locked position to an unlocked position; mounting a second rotatable member to the handle bar adjacent to the first rotatable member and operatively connecting the second rotatable member to the second locking device so that the second rotatable member unlocks the second locking device by rotating the second rotatable member from a locked position to an unlocked position, independently of the first rotatable member; and rotating both the first and second rotatable member to the unlock positions to unlock the first and second locking devices.

The method can further comprise providing a rotation lock mounted to one of the first and second movable members to lock the one movable member from rotating to the unlock position. To operate, the operator can slide the rotation lock to unlock the one movable member and then rotate the first and second movable members together to the unlock positions with one hand.

### Brief Description of the Drawings

These and other features, aspects, and advantages of the present invention will become more apparent from the following description, appended claims, and accompanying exemplary embodiments shown in the drawings, which are briefly described below.

Fig. 1 schematically illustrates a perspective view of a stroller incorporating a one-hand-fold (OHF) actuator according to the present invention.

Fig. 2 illustrates a detailed perspective view of the one-hand-fold actuator of Fig. 1, shown at its neutral (unactuated) position.

Fig. 2A illustrates the OHF actuator of Fig. 2 at a first partially actuated position (right side locking device unlocked).

Fig. 2B illustrates the OHF actuator of Fig. 2 at a second partially actuated position (left side locking device unlocked).

Fig. 2C illustrates the OHF actuator of Fig. 2 at a full actuated position (both the left and right locking devices unlocked).

Fig. 3 illustrates an exploded view of the OHF actuator of Fig. 1.

Fig. 4 schematically illustrates the inner side view of the OHF actuator of Fig. 1.

Fig. 5 schematically illustrates the cross-sectional view of the OHF actuator of Fig. 1, illustrating how the pins engage its left and right actuable members.

Fig. 6 illustrates an enlarged view of the pin connected to a control cable.

Fig. 7 illustrates an exemplary exploded cut-away view of the locking device for a stroller of Fig. 1.

Fig. 8 illustrates a cross-sectional view of the locking device of Fig. 7.

Fig. 9A illustrates a top view of a control plate for actuating the locking device of Fig. 7.

Fig. 9B illustrates a cross-sectional side view of the control plate of Fig. 9A.

Fig. 9C is an end view of the control plate of Fig. 9A.

### Detailed Description

The present description refers to directions in describing the stroller. They, however, refer relative to the drawings (as normally viewed) for convenience. The directions, such as left, right, upper, lower, etc., are not intended to be taken literally or limit the present invention in any form. Moreover, the numerical nomenclatures, first, second, third, fourth, etc., are used solely for purposes of tracking the elements or features. These numerical nomenclatures are not intended to be taken literally or to limit their associated elements or features.

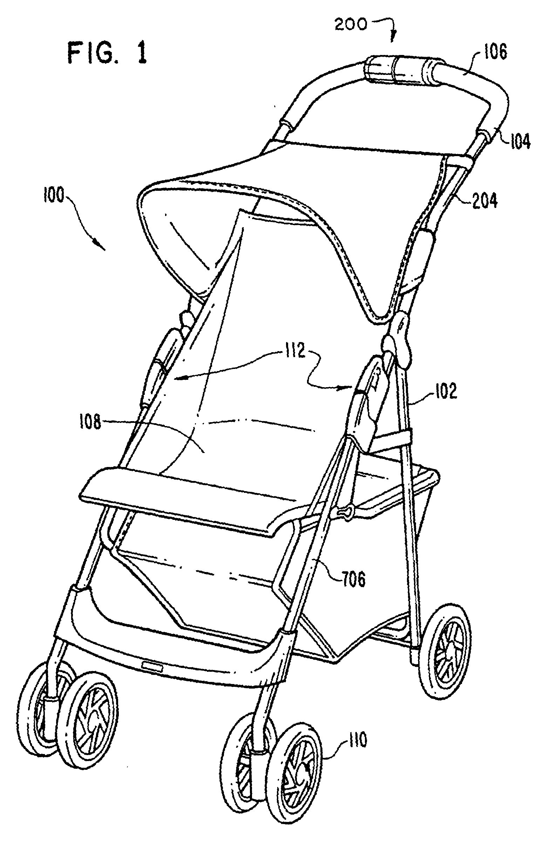

Fig. 1 schematically illustrates a commercially available stroller 100, such as Graco LITERIDER, which has a foldable frame 102 with left and right fold locking devices 112. The stroller 100 is shown incorporating a one-hand-fold (OHF) actuator 200 according to the present invention. The stroller frame 102 has left and right push bars 204 connected to the respective left and right fold locking devices 112. A handle bar 104 having a gripping area 106 connects to the left and right push bars 204. The stroller also includes a passenger support 108 for holding a child, and a suitable number of wheels 110, e.g., typically three to six wheels (six wheels shown), to allow easy transport. The locking devices 112 can lock the stroller frame from its left and right sides and allow the stroller to collapse from an extended (use) position (Fig. 1) to a collapsed (stow) position (not illustrated). The specific structural details of the stroller and the associated elements that allow the stroller 100 to collapse are disclosed in the applicant's U.S. Patent No. 5,454,584, which is incorporated here by reference.

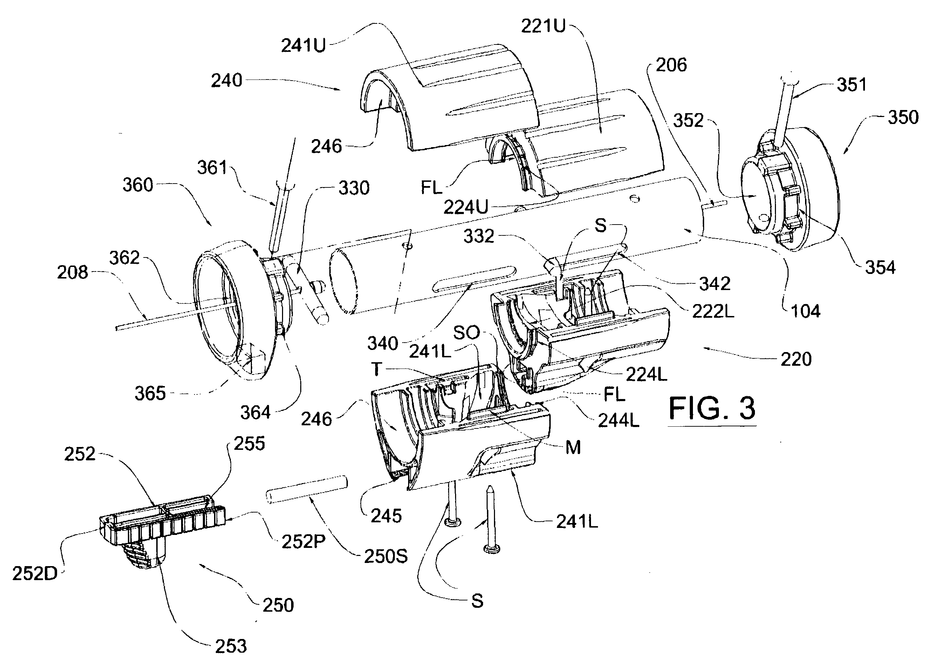

Referring to Figs. 3-5, the OHF actuator 200 comprises a pair of independently operable members 220, 240. The OHF actuator 200 also can include an optional rotation lock 250, which is preferable. The first (right) and second (left) members 220, 240 are movably mounted to the handle bar 104, preferably centrally of the handle bar 104, as shown in Fig. 1. Each of the first and second rotatably mounted members 220, 240 is associated with a cable 206, 208, which extends through the handle bar 104 and the push bar 204, and mechanically links to the associated locking device 112.

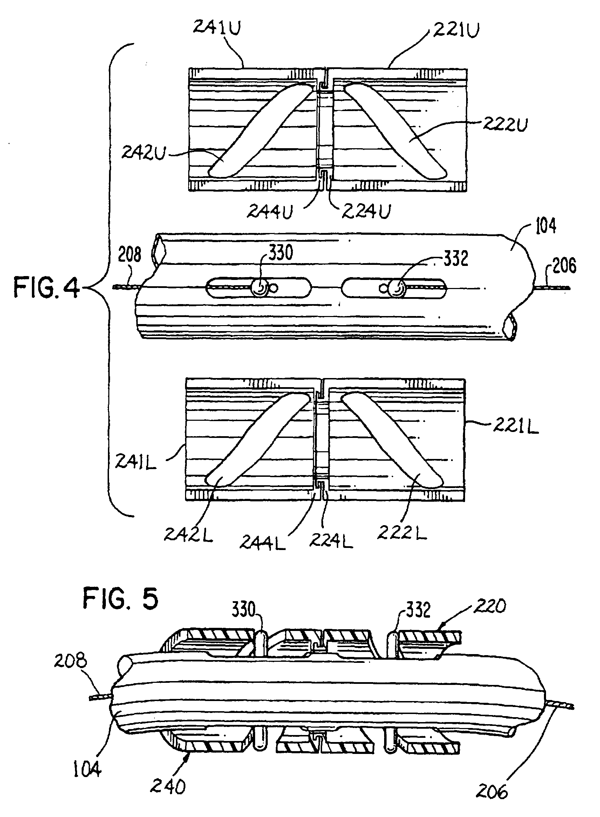

Referring to Fig. 3, each of the first and second movable members 220, 240 is formed as two half shells 221U (upper), 221L (lower) (collectively 221), 241U (upper), 241L (lower) (collectively 241). The first upper and lower half shells 221U, 221L are substantially similar and mirror image halves of each other, except for their upper and lower grooves 222U, 222L (collectively 222) engaging the right pin 332. See Figs. 4 and 5. Similarly, the second upper and lower half shells 241U, 241L are substantially similar and mirror image halves of each other, again except for their upper and lower grooves 242U, 242L (collectively 242) engaging the left pin 330. See Figs. 4 and 5.

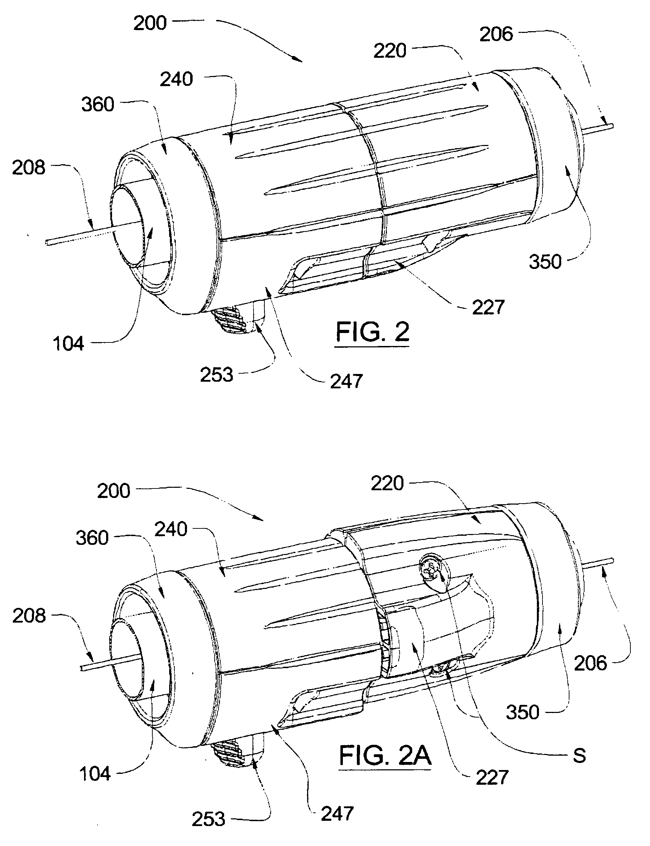

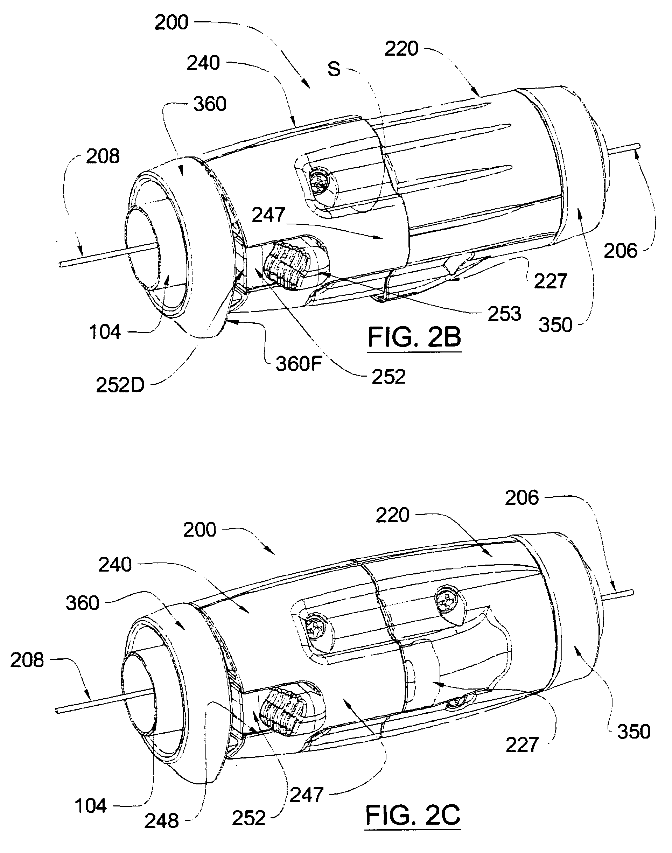

The outer side of each of the first and second movable members 220, 240 is configured to be grasped by an operator. See Figs. 2-2C. The first half shells 221 can be held together as a single unit with fasteners, such as screws S (as shown), or snap fit connectors, which are well known, or bonded or welded. Similarly, the second half shells 241 can be held together as a single unit with fasteners, such as screws S (as shown), or snap fit connectors, bonded, welded. etc. The first and second half shells 221, 241 are generally semi-cylindrical members. Each of the first and second two half shells 221U, 221L, 241U, 241L can include aligning mortise M and tenon T. The other half shell can include complementary mortise and tenon for alignment. The first and second half shells 221, 241 can use these mortise and tenon joints and adhesive to bond the upper and lower half shells, instead of screws, or combination of both.

The first and second half shells 221, 241 also can be mechanically connected together, while maintaining their independent operability. In the embodiment shown, the first and second rotatable members 221, 241 are connected end-to-end with an end coupling 224, 244. The end coupling comprises a first coupling member 224U (upper), 224L (lower) (collectively 224) formed on the first movable member 220 and a second coupling member 244U (upper), 244L (lower) (collectively 244) formed on the second movable member 240. One of the first and second coupling 224, 244 comprises an annular flange FL at the adjoining end and the other comprises a complementary annular socket SO that receives and circumscribes the annular flange FL. In the embodiment shown, the first coupling 224 has the annular flange FL and the second coupling 244 has the complementary annular lip SO. The flange and socket can be reversed. The annular flange and socket configuration maintains the first and second movable members 220, 240 held connected together, preventing their axial displacement relative to each other, while allowing one to rotate relative to the other.

The OHF actuator 200 includes a motion transfer mechanism comprising a first opposing pair of grooves 222, a second opposing pair of grooves 242, and first and second pulling members 332, 330. The first and second grooves, 222, 242 engage and move the pulling members 332, 330 to unlock the left and right locking devices 112 as the first and second movable members 220, 240 are rotated to their unlock position (Fig. 2C) from their lock position (Fig. 2). The pulling members 332, 330 can comprise first and second pins 340, 330. The handle bar 104 has first and second slots 342, 340. The first and second pins 340, 330 are movably disposed respectively in the first and second slots 342, 340 and are operably connected to the respective first and second locking devices 112. The ends of the pins 340, 330 extend into the respective first and second opposing pairs of grooves 222, 242.

Fig. 4 schematically shows the specific cam profiles of the first and second grooves 222, 242. While many cam profiles of the grooves can be used, the preferred embodiment has a cam profile that generally runs linearly along the circumference of the inner member, such as a helical or spiral groove. If the half shell 221U, 221L, 242U, 241L is laid flat, its groove 222, 242 would form a substantially straight diagonal line. In this respect, each of the first and second half shells 221. 241 can have upper and lower spiral or helical grooves 222U, 222L, 242U, 242L extending spirally or helically along its inner periphery. The first upper and lower of helical grooves 222U, 222L cooperate with the right pin 332, which uses the right cable 206 wired to the right locking device 112. The first helical grooves 222, in the assembled OHF actuator 200, are opposingly directed, forming a substantially X shape (when superimposed one over the other). Similarly, the second upper and lower helical grooves 242U, 242L cooperate with the left pin 330, which uses the left cable 208 wired to the left locking device 112. The second helical grooves, in the assembled OHF actuator 200, are opposingly directed, like the first helical grooves, forming a substantially X shape (when superimposed one over the other). Moreover, the upper helical grooves 222U, 242U run in the opposite directions. Similarly, the lower helical grooves 222L, 242L run in the opposite directions. See Figs. 4 and 5. Because of the opposing helical directions, when the first and second rotatable members 220, 240 are rotated together, the pins 332, 330 shift linearly in the opposite directions, away from each other (lock) and toward each other (unlock).

The first and second pins 332, 330 protrude out beyond their respective first and second slots 342, 340 formed in the handle bar 104, as shown in Figs. 3 and 5. The first upper and lower helical grooves 222U, 222L engage the upper and lower protruding ends of the first pin 332 and guide the first pin 332 axially (right to left) along the first slot 342, which substantially runs axially of the bar 104, as the first rotatable member 220 rotates from its neutral (lock) position (Fig. 2) to the actuated (unlock) position (Fig. 2A). This pulls the right cable 206 and unlocks the right locking device 112. Similarly, the second upper and lower helical grooves 242U, 242L engage the upper and lower protruding ends of the second pin 330 and guide the second pin 332 axially (left to right) along the second slot 340, which substantially runs axially of the bar 104, as the second rotatable member 240 rotates from its neutral (lock) position (Fig. 2) to the actuated (unlock) position (Fig. 2B). This pulls the left cable 208 and unlocks the left locking device 112.

As the operator rotates the rotatable member 220, 240, the helical grooves 222, 242 rotate and shift the pin 332, 330 axially along the slot 342, 242. Each rotatable member 220, 240, with the associated pin 332, 330, converts rotational motion into linear axial motion. The first and second helical grooves 222, 242 are configured to move the first and second pins 332, 340 in the opposite directions, while the first and second slots 342, 340 confine the first and second pins from rotating. The first and second helical grooves 222, 242 engage and maintain the first and second pins held between the first and second opposing pairs of helical grooves without any need for a spring or the like. That is, the opposingly directed first and second helical grooves 222, 242 entrap the ends of the pins even when the cable has no or little tension, which occurs during stroller unfolding or latching stage. The opposingly directed helical grooves thus allow a simple way of stabilizing the pins 332, 330 during latching of the stroller, when the tension in the operating cable effectively goes to zero. Thus, a spring or the like is not needed to maintain the pins 332, 330 positioned properly in the grooves of the first and second movable members 220, 240.

Referring to Fig. 3, the OHF actuator 200 further includes first and second collars 350, 360. Each of the first and second collars 350, 360 is fixedly mounted to the left or right sides of the first or second movable members 220, 240. In the embodiment shown, each collar 350, 360 is fixed to the handle bar 104 with a pin 351, 361 riveted (or with a screw screwed) through the handle bar 104 and the collar. Each collar 350, 360 has an aperture 352, 362 dimensioned to allow insertion of the handle bar 104 therethrough and has an extension 354, 364 dimensioned to cooperate with an annular end pocket or recess 226, 246 formed in the collar. Specifically, the extension 354, 364 seats in the annular end recess 226, 246 to prevent the rotatable member 220, 240 from shifting axially relatively to the handle bar 104, while allowing the respective rotatable member 220, 240 to rotate relative thereto.

One of the first and second rotatable members 220, 240 can carry the rotation lock 250 and the collar 350, 360 associated with that rotatable member can cooperate with the rotation lock 250 to lock that rotatable member, i.e., prevent it from rotating unintentionally. To operate the rotatable member 220, 240 associated with the rotation lock 250, the operator must deliberately move the rotation lock 250 away from the associated collar. The rotation lock 250 is there to prevent inadvertent twisting of that rotation member, thereby preventing inadvertent release of the associated locking device 112 and prevent inadvertent folding of the stroller 100. The rotation lock 250 is preferred, but not required since the present OHF actuator 200 requires independent actuation of both of its first and second rotatable member. The rotation lock 250 thus operates as a secondary lock when it is incorporated.

The rotation lock 250 can be adapted for either left hand or right hand operation. For right hand operation, the second (left) rotatable member 240 can carry the latch lock 250 and for left hand operation, the first (right) rotatable member 220 can carry the latch lock 250 so that the latch lock can be operated with the operating hand's thumb. The embodiment shown in Figs. 2-3 is for right hand operation.

Referring to Fig. 3, the rotation lock 250 comprises a slidable member 252 slidably mounted in a recess or pocket 245 formed in the second rotatable member 240. The pocket 245 can be formed from a bulging protrusion 247, from a generally cylindrical (or any other shaped configured for gripping) rotatable member 220 so that the user can feel the way through without having to look at it. Moreover, the bulging protrusion 247 provides a positive surface to which the operator can grip, either with one's thumb or other part of the hand, such as the palm. The bulging protrusion 247 also can indicate the position of the rotatable member 220. In this respect, the other rotatable member 220, the one not carrying the rotation lock 250 can also have a protruding bulge 227 extending contiguously with the other bulging protrusion 247 forming the pocket 245 for the slidable member 252.

The slidable member 252 can have a raised finger land 253 adapted to be operated with the thumb (or other part of the hand). In this respect. the finger land 253 can have grooves, bumps, contours or any other irregularity to improve gripping. The second collar 360 has a recess or pocket 365 (in phantom) dimensioned to receive a distal end 252D of the slidable member 252. The proximal end 252P of the slidable member 252 is inserted into the pocket 245. To accommodate the finger land 253, the bulging protrusion 247 has a cutout 248 (Fig. 2B, 2C) to allow the slidable member 252 to move away from the collar 360.

The slidable member 252 can have a bed or recess 255 for seating or receiving a spring 250S, such as a compression spring. The spring 250S abuts against the end of the pocket 245 so that it biases the slidable member 252 toward the collar 360. At its neutral position, the slidable member's distal end 252D thus enters the second collar's pocket 365 to prevent the second rotatable member 240 from rotating.

Alternatively, the slidable member 252 can also be configured so that it can be inserted into the first rotatable member 220, such as into a pocket formed in its protruding bulge 227. This slidable member 252 can lock the first and second rotatable members 220. 240 together to enable easier manipulation of the OHF actuator 200.

Referring to Figs. 2B and 2C, the inner face 360F of the collar 360 is configured to keep the distal end 252D of the slidable member 252 from protruding beyond the distal end 240D of the second rotatable member 240 when the second slidable member 240 is rotated away from its neutral position. The inner face 360F blocks the slidable member 252 and keeps it in the compressed state so that when the second rotating member 240 is rotated back to its neutral position, the slidable member 252 automatically moves into the pocket 365. Thus, the slidable member 252 will automatically lock without any intervention from the operator when the second rotatable member 240 returns to its neutral position.

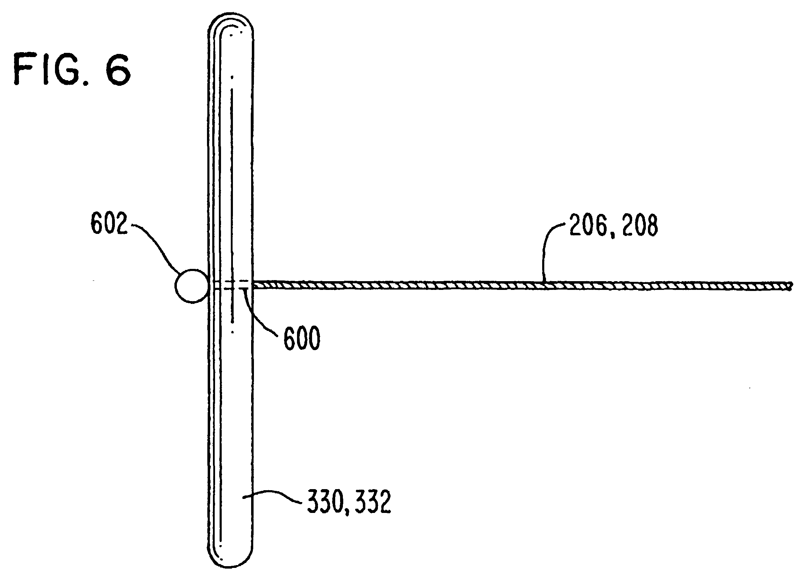

Fig. 6 shows the details of the connection between cables 206, 208 and the pins 332, 330. The two cables 206, 208 are identical in structure and the two pins 332, 330 are identical in structure. The cable 206, 208 is threaded through a hole 600 in the pin 332, 330. The cable 206, 208 can have a ball end 602 (or preferably mount a ball 602 after threading the cable in the hole 600) to maintain a secure cable connection. The cable 206, 208 can be threaded into the slot 340, 342 and drawn through the push bar 204, and wired to the locking device 112. The cable is generally maintained slack free (slight tension) so that shifting the pins 330, 332 toward each other readily actuates the locking devices.

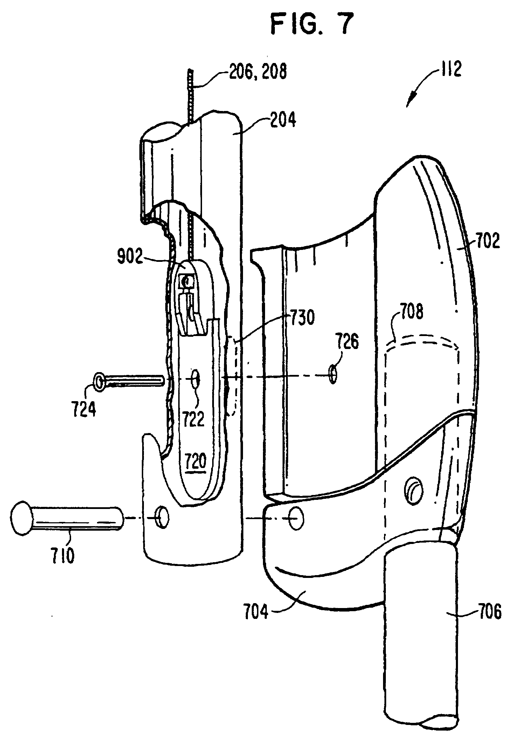

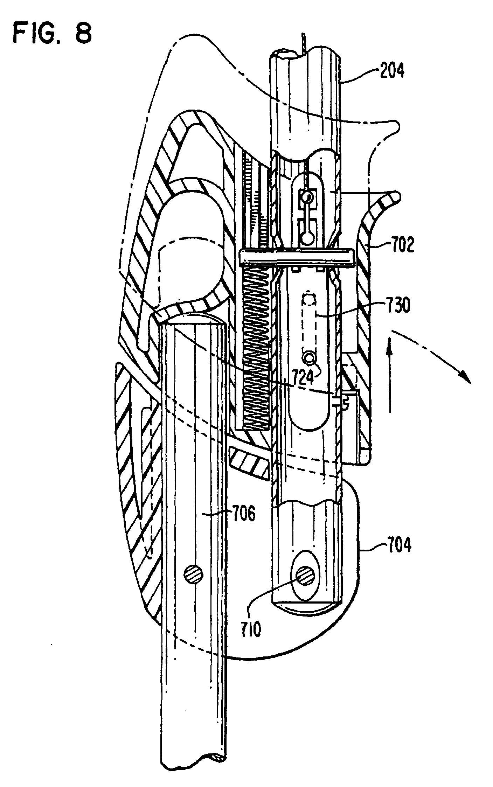

Figs. 7 and 8 shows the details of the locking device 112, as disclosed in aforementioned U.S. Patent No. 5,454,584. The locking device comprises a slidable catch 702 and a fixed body 704. The fixed body 704 is attached to the front leg 706. The front leg 706 protrudes beyond the fixed body 704 and extends into the slidable catch 702, which is slidably mounted to the lower end of the push bar 204. The slidable catch 702 has a pocket 708 to receive the protruding end of the front leg 706. Moving the slidable catch 702 upward, as shown in Fig. 8, clears the protruding end of the front leg 706. When the slidable catch 702 clears the protruding end, the push bar 204 can pivot with respect to the front leg 706 about a hinge 710 formed in the fixed body 704. This facilitates collapsing of the stroller.

The slidable catch 706 is wired to the respective rotatable member 220, 240 using the cable 206, 208 and a control plate 720. The control plate 720 and the cable 206, 208 are disposed inside the push bar 204. The plate 720 includes a cable retention mechanism 902 at its upper end and an aperture 722 about its mid point. The aperture 722 can receive a pin or rivet 724, which extends through an elongated slot 730 cut into the side of the push bar 204. The pin 724 connects to the slidable catch 702 via an aperture 726 formed on the slidable catch 702. This assembly mechanically links the control plate 720 disposed on the interior of the push bar 204 to the slidable catch 702 disposed exterior of the push bar 204. The elongated slot 730 allows the control plate 720 and the connected slidable catch 702 to slide upwardly (as shown in Figs. 7 and 8) with respect to the push bar 204. Fig. 8 shows the sliding action, the released (unlocked) position being shown in phantom

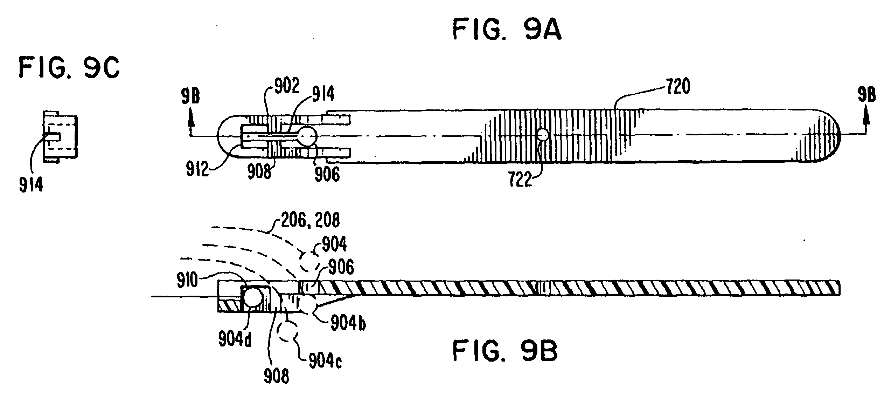

Figs. 9A-9C show three views of the control plate 720. The cable retention mechanism 902 is adapted to hold the end of the cable 206, 208. The cable has another ball end 904. The cable retention mechanism 902 thus comprises an aperture 906 into which the ball end 904 enters. After the ball end 904 passes through the aperture 906, the ball end 904 assumes the position at 904b (in phantom). Then the ball end 904 is drawn over a ridge 908 (as shown at 904c in phantom). Finally, the ball end 904 enters a pocket 910 (as shown at 904d). The ball end 904 is bounded by a front wall 912 and the ridge 908. During the cable attachment process, the cable 206, 208 extends through a slot 914.

In operation, Figs. 2-2C illustrate the OHF actuator 200 at various positions, between the neutral (locked) position (Fig. 2) to fully actuated (unlocked) position (Fig. 2C). Figs. 2A and 2B illustrate the OHF actuator 200 in the partially actuated positions, where only one of the two rotatable members 220, 240 are unlocked in each instance. The OHF actuator 200 of the present invention has two independently operable members 220, 240, each associated with one of the two locking devices 112. In the positions shown in Figs. 2A and 2B, since only one of the two locking devices 112 are unlocked, the stroller cannot be folded.

Referring to Figs. 2 and 2C, for right hand operation, to fold the stroller 100, the operator places the right hand on the OHF actuator 200. With the right hand's thumb, the operator can engage the raised finger land 253 and slide the slidable member 252 to the right (toward the first rotatable member 220), which unlocks the second rotatable member 240 from its associated collar 360. Both the first and second rotatable members 220, 240 are free to rotate at this point. The same hand operating the slidable member 220 can grip both first and second rotatable members 220, 240 and rotate forward to the unlock positions (Fig. 2C). This pulls the first and second pins 332, 330 toward each other, tensioning the cables 206, 208, which in turn lifts the control plates 720 up to raise the slidable catches 702 of the right and left locking devices 112, clearing the protruding ends of the front legs 706 to allow the stroller to fold.

If during operation, the user unintentionally rotates the first rotatable member 220, since the second rotatable member 240 remains locked, which requires deliberate manipulation to unlock and rotate, unintentional folding of the stroller will be prevented. Moreover, if the operator were to somehow manipulate the rotation lock 250, since the first and second rotatable members 220, 240 are independently operable, meaning deliberate and conscientious effort is needed to rotate both rotatable members with one hand, while the rotation lock 250 is unlocked, unintentional folding of the stroller can be prevented. By providing two independently operable members plus the secondary rotation lock 250, the operator has to conscientiously and deliberately operate both members 220, 240 and the lock 250 to fold the stroller, which prevents unintentional folding.

Given the disclosure of the present invention, one versed in the art would appreciate that there may be other embodiments and modifications within the scope and spirit of the present invention. Accordingly, all modifications attainable by one versed in the art from the present disclosure within the scope and spirit of the present invention are to be included as further embodiments of the present invention. The scope of the present invention accordingly is to be defined as set forth in the appended claims.

## Claims

1. A stroller having a frame foldable between an extended configuration and a collapsed configuration, and first and second locking devices mounted on the frame to lock the frame in the extended configuration, the frame having a handle bar connected to portions of the frame connected to the first and second locking devices, **characterized in that** the stroller further comprises:
a fold actuator mounted on a portion of the handle bar, the fold actuator comprising:
a first movable member operatively connected to the first locking device for unlocking the first locking device, the first member being movably mounted to the handle bar between a locked position and an unlocked position; and
a second movable member operatively connected to the second locking device for unlocking the second locking device, the second member being movably mounted to the handle bar between a locked position and an unlocked position,
wherein the first and second movable members are independently operable.

2. A stroller according to claim 1, wherein the first and second movable members are independently rotatable relative to the handle bar.

3. A stroller according to claim 2. wherein the fold actuator further includes a rotation lock mounted to one of the first and second movable members to prevent the one movable member from rotating to the unlock position.

4. A stroller according to claim 3, wherein the rotation lock and the first and second movable members are operable with one hand to fold the stroller.

5. A stroller according to claim 3, wherein the rotation lock comprises a collar fixedly mounted to the handle bar adjacent to one of the first and second movable members and a latch movably mounted to the one movable member, the latch engaging the collar to prevent the one moving member from rotating, wherein the latch is movable toward and away from the collar and is biased toward the collar so that the latch automatically engages the collar when the one movable member is in the locked position.

6. A stroller according to claim 5, wherein the latch and the first and second movable members are operable with a single hand to release both of the locking devices.

7. A stroller according to claim 3, wherein the fold actuator further includes a motion transfer mechanism comprising:
a first opposing pair of grooves formed on the first movable member;
a second opposing pair of grooves formed on the second movable member;
first and second slots extending through the handle bar; and
first and second pins movably disposed respectively in the first and second slots and operably connected to the respective first and second locking devices, and extending into the first and second opposing pairs of grooves.

8. A stroller according to claim 7, wherein the first pin has opposing ends extending outwardly from the handle bar, the opposing ends of the first pin being guided in the first opposing pair of grooves and the second pin has opposing ends extending outwardly from the handle bar, the opposing ends of the second pin being guided in the second opposing pair of grooves, wherein the first and second opposing pairs of grooves are configured to move the first and second pins in opposing directions, while the first and second slots confine the first and second pins linearly.

9. A stroller according to claim 8, wherein each of the first and second pairs of grooves are helical, and configured to engage and maintain the first and second pins held between the first and second opposing pairs of helical grooves without separately biasing the first and second pins.

10. A stroller according to claim 3, wherein each of the first and second movable members is rotatable about an axis generally parallel to the longitudinal axis of the handle bar.

11. A stroller according to claim 7, wherein first and second cables respectively connect the first and second pins to the respective first and second locking devices.

12. A stroller according to claim 7, wherein the first and second movable members each comprise two half shells connected together.

13. A stroller according to claim 12, wherein the first and second pairs of grooves are formed on the inner periphery of the respective two half shells of the first and second rotatable members.

14. A stroller according to claim 13, wherein each pair of the first and second grooves are angled symmetrically in the opposite directions.

15. A stroller according to claim 14, wherein each of the first and second grooves is helical.

16. A fold actuator for a stroller having a frame foldable between an extended configuration and a collapsed configuration, and first and second locking devices mounted on the frame to lock the frame in the extended configuration, the frame having a handle bar connected to portions of the frame connected to the first and second locking devices, **characterized in that** the fold actuator comprises:
a first movable member adapted to be operatively connected to the first locking device for unlocking the first locking device, the first member being adapted to be movably mounted to the handle bar between a locked position and an unlocked position; and
a second movable member adapted to be operatively connected to the second locking device for unlocking the second locking device, the second member being adapted to be movably mounted to the handle bar between a locked position and an unlocked position,
wherein the first and second movable members are independently operable.

17. A fold actuator according to claim 16, wherein the first and second movable members are independently rotatable relative to the handle bar.

18. A fold actuator according to claim 17, further including a rotation lock mounted to one of the first and second movable members to prevent the one movable member from rotating to the unlock position.

19. A fold actuator according to claim 18, wherein the rotation lock and the first and second movable members are operable with one hand to fold the stroller.

20. A fold actuator according to claim 19, wherein the rotation lock comprises a collar adapted to be fixedly mounted to the handle bar adjacent to one of the first and second movable members and a latch movably mounted to the one movable member, the latch engaging the collar to prevent the one moving member from rotating, wherein the latch is movable toward and away from the collar and is biased toward the collar so that the latch automatically engages the collar when the one movable member is in the locked position.

21. A fold actuator according to claim 20, further including a motion transfer mechanism comprising:
a first opposing pair of grooves formed on the first movable member;
a second opposing pair of grooves formed on the second movable member;
first and second pins adapted to be movably disposed respectively in first and second slots formed in the handle bar and operably connected to the respective first and second locking devices, and extending into the first and second opposing pairs of grooves.

22. A fold actuator according to claim 21, wherein the first pin has opposing ends adapted to extend outwardly from the handle bar, the opposing ends of the first pin being guided in the first opposing pair of grooves and the second pin has opposing ends adapted to extend outwardly from the handle bar, the opposing ends of the second pin being guided in the second opposing pair of grooves, wherein the first and second opposing pairs of grooves are configured to move the first and second pins in opposing directions, while the first and second slots confine the first and second pins linearly.

23. A fold actuator according to claim 22, wherein each of the first and second pairs of grooves are helical, and configured to engage and maintain the first and second pins held between the first and second opposing pairs of helical grooves without separately biasing the first and second pins.

24. A fold actuator according to claim 23, wherein each of the first and second movable members is adapted to rotatable about an axis generally parallel to the longitudinal axis of the handle bar.

25. A method of folding a stroller having a frame foldable between an extended configuration and a collapsed configuration, and first and second locking devices mounted on the frame to lock the frame in the extended configuration, the frame having a handle bar connected to portions of the frame connected to the first and second locking devices, **characterized in that** the method comprises:
mounting a first rotatable member to the handle bar and operatively connecting the first rotatable member to the first locking device so that the first rotatable member unlocks the first locking device by rotating the first rotatable member from a locked position to an unlocked position; and
mounting a second rotatable member to the handle bar adjacent *to* the first rotatable member and operatively connecting the second rotatable member to the second locking device so that the second rotatable member unlocks the second locking device by rotating the second rotatable member from a locked position to an unlocked position, independently of the first rotatable member; and
rotating both the first and second rotatable member to the unlock positions to unlock the first and second locking devices.

26. A method according to claim 25, further providing a rotation lock mounted to one of the first and second movable members to lock the one movable member from rotating to the unlock position.

27. A method according to claim 26, further comprising sliding the rotation lock to unlock the one movable member and then rotating the first and second movable members together to the unlock positions with one hand.
